# EUROPÄISCHE PATENTSCHRIFT

(11) **EP 1 851 274 B1**
(45) Veröffentlichungstag und Bekanntmachung des Hinweises auf die Patenterteilung: **16.07.2008**
(21) Anmeldenummer: 06706790.0
(22) Anmeldetag: 09.02.2006
(51) Int. Cl.: C08L 83/04, B01D 19/04

(54) **VERFAHREN ZUR HERSTELLUNG VON ENTSCHÄUMERFORMULIERUNGEN**
METHOD FOR THE PRODUCTION OF DEFOAMER FORMULATIONS
PROCEDE POUR PRODUIRE DES FORMULATIONS ANTIMOUSSE

(30) Priorität: 17.02.2005 DE 102005007313
(43) Veröffentlichungstag der Anmeldung: 07.11.2007
(73) Patentinhaber: Wacker Chemie AG, 81737 München (DE)
(72) Erfinder: SCHNEIDER, Otto, 84489 Burghausen (DE); BURGER, Willibald, 84489 Burghausen (DE); RAUTSCHEK, Holger, 01612 Nünchritz (DE)
(74) Vertreter: Deffner-Lehner, Maria
(86) Internationale Anmeldenummer: PCT/EP2006/001155
(87) Internationale Veröffentlichungsnummer: WO 2006/087137

(56) Entgegenhaltungen:
- EP-A- 0 023 533
- CH-A- 526 324
- DE-A1- 2 829 261
- DE-A1- 10 255 649
- US-A- 4 639 489

## Beschreibung

Die Erfindung betrifft ein Verfahren zur. Herstellung von Entschäumerformulierungen unter Verwendung von hydrophiler Kieselsäure.

In vielen flüssigen, insbesondere wässrigen Systemen, die als erwünschte oder auch unerwünschte Bestandteile oberflächenaktive Verbindungen enthalten, können durch Schaumbildung Probleme auftreten, wenn diese Systeme in mehr oder weniger intensiven Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaumes kann auf mechanischem Wege oder durch den Zusatz von Entschäumern erfolgen. Dabei haben sich Entschäumerformulierungen auf Siloxanbasis besonders bewährt.

Entschäumerformulierungen auf Basis von Siloxanen werden beispielsweise nach US 3383327 A durch Erhitzen von hydrophiler Kieselsäure in Polydimethylsiloxanen hergestellt.

Die Herstellung von Entschäumerformulierungen unter Verwendung von Polysiloxanen mit Alkoxy- oder Hydroxygruppen ist ebenfalls bekannt. Dabei werden zum Beispiel Polysiloxane eingesetzt, die durchschnittlich mehr als eine Alkoxygruppe je Siliziumatom tragen (DE 2903725). Diese hohe Konzentration an funktionellen Gruppen bedingt aber eine schlechte Stabilität in den schäumenden Medien was zum Teil zu einer schnell nachlassenden Wirkung führt. Das ist z.B. dann erwünscht, wenn die Entschäumerformulierung nur bei Abfüllprozessen wirken, aber später den Schaum nicht dämpfen soll (US 4101443 A). Für die meisten Anwendungen ist es aber eher nachteilig.

EP 163541 B1 beschreibt ein Verfahren zur Herstellung von Entschäumerformulierungen wobei Polysiloxane mit endständigen Hydroxylgruppen mit anderen Siloxanen unter Einwirkung von Katalysatoren zu verzweigten Siloxanen umgesetzt werden. Anschließend werden diese verzweigten Siloxane gemeinsam mit niedermolekularen Polysiloxanen (z.B. mit einer Viskosität von 10-50 mm²/s) mit zwei endständigen Hydroxylgruppen und hydrophiler Kieselsäure erhitzt. Die daraus entstehenden Entschäumerformulierungen weisen eine sehr hohe Viskosität auf, was für den praktischen Einsatz unvorteilhaft ist.

Patterson, Robert E. (Colloids Surf., A; 74 (1); 115-26; 1993) beschreibt ebenfalls die Herstellung von Entschäumerformulierungen unter Verwendung hydrophiler Kieselsäure und von Polydimethylsiloxanen mit endständigen Hydroxylgruppen. Eine Molmasse dieses Polysiloxans von 4000 bis 18000 g/mol soll für die Wirkung in der bei der Papierherstellung anfallenden Schwarzlauge optimal sein. Wie der Fachmann leicht errechnen kann, sind nach diesem Befund also Polydimethylsiloxane, bei denen 0,8 -4 mol % der Siloxaneinheiten eine Silanolgruppe tragen, für die Entschäumerwirksamkeit, optimal.

Da die Wirksamkeit der so hergestellten Entschäumerformulierungen verbesserungswürdig ist, wird oft vorgeschlagen, anstelle der hydrophilen Kieselsäure vorbehandelte hydrophobierte Kieselsäuren zu verwenden. Entsprechend US 3113930 A ist auch bei Verfahren unter Verwendung von vorbehandelter hydrophobierter Kieselsäure ein gemeinsames Erhitzen dieser Kieselsäure mit dem Polydimethylsiloxan vorteilhaft. In dem Verfahren gemäß GB 1549884 A1 wird die vorbehandelte hydrophobe Kieselsäure bei der Emulgierung zugegeben, in EP 23533 B1 wird die geeignete vorbehandelte hydrophobe Kieselsäure aufgrund der spezifizierten Methanolbenetzbarkeit ausgewählt, in US 4145308 A wird die Einarbeitung der vorbehandelten hydrophoben Kieselsäure durch die Zugabe von Ölsäure verbessert.
Gemäß DE 19504645 C1 werden vorbehandelte hydrophobe Kieselsäure zu Formulierungen, die durch Erhitzen von hydrophiler Kieselsäure in Polydimethylsiloxanen hergestellt wurden, zugesetzt, um eine bessere Wirksamkeit der so hergestellten Entschäumerformulierungen zu erreichen.
In US 6656975 B1 wird durch die Verwendung von vorbehandelten hydrophoben Kieselsäuren erreicht, dass der Kontaktwinkel zwischen der Entschäumerformulierung, einem Verkapselungsagens und einer organischen Trägerflüssigkeit kleiner als 130° ist und so eine Verkapselung und Herstellung von Entschäumerdispersionen ermöglicht.

Die Verfahren zur Herstellung von Entschäumerformulierungen unter Verwendung von vorbehandelten hydrophoben Kieselsäuren haben den Nachteil, dass sie aufgrund des hohen Preises der vorbehandelten hydrophoben Kieselsäuren unökonomisch sind.

Die nach dem Stand der Technik hergestellten Entschäumerformulierungen haben außerdem den Nachteil, dass sie in stark schäumenden tensidreichen Systemen nicht immer eine ausreichend lang anhaltende Wirksamkeit aufweisen, oder dass sie aufgrund der hohen Viskosität nur schwer handhabbar sind und bei der Lagerung nicht stabil sind.

Die Aufgabe der Erfindung bestand deshalb darin, ein ökonomisches Verfahren zur Herstellung von Entschäumerformulierungen bereitzustellen, bei dem Entschäumerformulierungen erhalten werden, die die oben genannten Nachteile nicht aufweisen, die insbesondere in tensidreichen stark schäumenden Medien eine verbesserte Wirksamkeit, insbesondere eine verbesserte Langzeitwirksamkeit zeigen, aber dennoch leicht handhabbar sind, d.h. keine hohen Viskositäten aufweisen, wobei die Viskosität bei der Lagerung keiner starken Veränderung unterliegen soll.

Gegenstand der Erfindung ist ein Verfahren zur Herstellung von Entschäumerformulierungen unter Verwendung von hydrophilen Kieselsäuren, bei dem
(i) in einem ersten Verfahrensschritt
   (A) 100 Teile mindestens eines Polyorganosiloxans aus Einheiten der allgemeinen Formel

      Rₐ(R¹O)_{b}SiO_{(4-a-b)/2} (I),

      worin R gleich oder verschieden sein kann und Wasserstoff, einen einwertigen, substituierten oder unsubstituierten, gesättigten oder ungesättigten Kohlenwasserstoffrest mit 1 bis 30 Kohlenstoffatomen je Rest bedeutet,
      R¹ gleich oder verschieden sein kann und ein Wasserstoffatom oder einen einwertigen, substituierten oder unsubstituierten gesättigten oder ungesättigten
      Kohlenwasserstoffrest mit 1 bis 30, vorzugsweise 1-4 Kohlenstoffatomen, je Rest bedeutet,
      a 0, 1, 2 oder 3 ist,
      b 0, 1, 2 oder 3, vorzugsweise 0 oder 1, ist,
      wobei die Summe a+b ≤ 3 ist,
      mit der Maßgabe, dass in 0,01 bis 0,2 % aller Einheiten der allgemeinen Formel (I), vorzugsweise in 0,02 bis 0,15 % aller Einheiten der allgemeinen Formel (I), bevorzugt in 0,05 bis 0,1 % aller Einheiten der allgemeinen Formel (I), jeweils bezogen auf die Gesamtzahl der Einheiten der Formel (I), b verschieden 0 ist, vorzugsweise 1 ist, während in den restlichen Einheiten der Formel (I) b 0 ist,
      mit
   (B) 0,1 bis 100 Teilen, vorzugsweise 1 bis 15 Teilen, mindestens einer amorphen hydrophilen gefällten oder pyrogenen Kieselsäure mit einer BET-Oberfläche von 20-1000 m²/g, vorzugsweise 50-800 m²/g, bevorzugt 80-500 m²/g,
   (C) 0 bis 50 Teilen, vorzugsweise 1 bis 50 Teilen, eines Siliconharzes, das im Wesentlichen aus Einheiten der allgemeinen Formel R₃SiO_{1/2} und SiO_{4/2} besteht, wobei R die oben angegebene Bedeutung hat,
   (D) 0 bis 200 Teilen, vorzugsweise 1 bis 200 Teilen, mindestens eines Polyorganosiloxans aus Einheiten der Formel,

      R_{a'}(R²O)_{b'}SiO_{(4-a'-b')/2} (II),

      wobei R die oben dafür angegebene Bedeutung hat,
      R² gleich oder verschieden sein kann und ein Wasserstoffatom oder einen einwertigen, substituierten oder unsubstituierten gesättigten oder ungesättigten
      Kohlenwasserstoffrest mit 1 bis 30, vorzugsweise 6 bis 30 Kohlenstoffatomen, je Rest bedeutet,
      a' 0, 1, 2 oder 3 ist,
      b' 0, 1, 2 oder 3, vorzugsweise 0 oder 1, ist
      wobei die Summe a'+b' ≤ 3 ist,
      mit der Maßgabe, dass in weniger als 0,01 % oder in mehr als 0,2 % aller Einheiten der allgemeinen Formel (II), vorzugsweise in mehr als 1 %, besonders bevorzugt in mehr als 5 %, aller Einheiten der allgemeinen Formel (II), jeweils bezogen auf die Gesamtzahl der Einheiten der Formel (II), b' verschieden 0 ist, vorzugsweise 1 ist, während in den restlichen Einheiten der Formel (II) b' 0 ist,
      und gegebenenfalls
   (E) 0 - 5,0 Teilen eines alkalischen oder sauren Katalysators und gegebenenfalls
   (F) 0 - 1000 Teilen einer organischen Verbindung, die kein Silicium enthält,
   vermischt werden und
(ii) in einem zweiten Verfahrensschritt diese Mischung auf eine Temperatur von 50-250°C erhitzt wird, wobei mindestens solange erhitzt wird, bis die Viskosität einen Wert von weniger als 50 %, vorzugsweise weniger als 40%, insbesondere weniger als 30 % der mit einem Kegel-Platte Viskosimeter bei einer Temperatur von 25°C und einem Schergefälle von 1/s gemessenen Viskosität aufweist, die die im ersten Verfahrensschritt hergestellte Mischung vor dem Erhitzen hatte.

Die nach dem erfindungsgemäßen Verfahren hergestelltem Entschäumerformulierungen haben den Vorteil einer deutlich verbesserten Wirksamkeit bei gleichzeitig niedriger und nahezu konstanter Viskosität. Neben einer niedrigen Viskosität, die für die leichte Handhabbarkeit der Entschäumerformulierung bei der Weiterverarbeitung, z.B. bei der Emulgierung, notwendig ist, ist es auch wichtig, dass die Viskosität bei der Lagerung keinen starken Veränderungen unterliegt, also die Entschäumerformulierung auch in dieser Hinsicht stabil ist. Vorzugsweise ändert sich die Viskosität bei Raumtemperatur-Lagerung um weniger als 25 %, bevorzugt um weniger als 10 %.

Aus dem Stand der Technik war nicht ableitbar, dass ein Verfahren zur Herstellung von Entschäumerformulierungen unter Verwendung von hydrophiler Kieselsäure Produkte mit deutlich besserer Wirksamkeit sowie niedrigerer und stabilerer Viskosität ergibt, wenn bei diesem Verfahren ein Polyorganosiloxan (A) verwendet wird, das einen niedrigen aber definierten Anteil an Siloxaneinheiten mit Hydroxyl- oder Alkoxygruppen enthält, wobei die Mischung aus diesem Polysiloxan und der hydrophilen Kieselsäure so lange ausgeheizt wird, bis die Viskosität weniger als 50 %, vorzugsweise weniger als 40%, insbesondere weniger als 30 % der mit einem Kegel-Platte Viskosimeter bei einer Temperatur von 25°C und einem Schergefälle von 1/s gemessenen Viskosität vor dem Ausheizen beträgt.

Beispiele für Rest R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest und 2-Ethylhexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest, sowie substituierte Alkylreste, wie Cyanoethyl-, Glycidoxypropyl-, Polyalkylenglycolpropyl-, Aminopropyl- und Aminoethylaminopropylreste.
Bevorzugt sind mehr als 80 Mol-% der Reste R Methylgruppen.

Beispiele für Reste R¹ sind lineare oder verzweigte Alkylreste, wie oben für R angegeben.

Beispiele für Reste R² sind lineare oder verzweigte Alkylreste, wie oben für R angegeben.

Vorzugsweise werden im ersten Verfahrensschritt als Polyorganosiloxane (A) lineare Polydiorganosiloxane eingesetzt, die gegebenenfalls Einheiten der Formel RSiO_{3/2} (wobei R die oben dafür angegebene Bedeutung hat) und SiO₂ enthalten können. Vorzugsweise enthalten die Polydiorganosiloxane (A) nicht mehr als 2 % an RSiO_{3/2}- oder SiO_{4/2}-Einheiten.
Die Summe a+b in den Polyorganosiloxanen (A) aus Einheiten der Formel (I) weist durchschnittlich einen Wert von vorzugsweise 1,5 bis 2,4, bevorzugt 1,8 bis 2,3, besonders bevorzugt 1,9 bis 2,1, auf.

Beispiele für Polyorganosiloxane (A) sind Polyorganosiloxane, die aus folgenden Einheiten bestehen (%-Angaben beziehen sich auf die Gesamtzahl der Einheiten in den Polyorganosiloxanen (A)):
- (A1) :: 98, 0 % (CH₃)₂SiO_{2/2}
1,80 % (CH₃)₃SiO_{1/2},
0, 20 % HO(CH₃)₂SiO_{1/2} oder OH(CH₃)SiO_{2/2}
- (A2) :: 98,5 % (CH₃)₂SiO_{2/2}
1,35% (CH₃)₃SiO_{1/2},
0,15 % HO(CH₃)₂SiO_{1/2} oder OH(CH₃)SiO_{2/2}
- (A3) :: 99,2 % (CH₃)₂SiO_{2/2}
0,70 % (CH₃)₃SiO_{1/2},
0,1 % CH₃O(CH₃)₂SiO_{1/2} oder CH₃O(CH₃)SiO_{2/2}
- (A4):: 99,5 % (CH₃)₂SiO_{2/2}
0,47 % (CH₃)₃SiO_{1/2},
0,03 % HO (CH₃)₂SiO_{1/2} oder OH(CH₃)SiO_{2/2}
- (A5):: 99,63 % (CH₃)-₂SiO_{2/2}
0,22 % (CH₃)₃SiO_{1/2},
0, 15 % HO(CH₃)₂SiO_{½} oder OH (CH₃) SiO_{2/2}
- (A6):: 99,17 % (CH₃)₂SiO_{2/2}
0,03 % CH₃SiO_{3/2}
0,72 % (CH₃)₃SiO_{1/2},
0,08 % HO (CH₃)₂SiO_{1/2} oder OH (CH₃)SiO_{2/2}
- (A7) :: 98,769 % (CH₃)₂SiO_{2/2}
0,03 % CH₃SiO_{3/2}
0,001% SiO_{4/2}
1,08 % (CH₃)₃SiO)_{1/2},
0,12 % HO (CH₃)₂SiO_{1/2} oder OH (CH₃) SiO_{2/2}
- (A8):: 99,80 % (CH₃)₂SiO_{2/2}
0, 01 % CH₃SiO_{3/2}
0,16 % (CH₃)₃SiO_{1/2},
0,04 % HO(CH₃)₂SiO_{1/2} oder OH(CH₃)SiO_{2/2}
- (A9):: 99,63% (CH₃)₂SiO_{2/2}
0, 26% (CH₃)₃SiO_{1/2},
0, 11 % C₂H₅O(CH₃)₂SiO_{1/2}, C₂H₅O(CH₃)SiO_{2/2}, HO(CH₃)₂SiO_{1/2} oder OH(CH₃)SiO_{2/2}
- (A10) :: 98,0 % (CH₃)₂SiO_{2/2}
0,01 % CH₃SiO_{3/2}
1,85 % (CH₃)₃SiO_{1/2},
0,15 % C₈H₁₇O(CH₃)₂SiO_{1/2/2}der OH(CH₃)SiO_{2/2}

Die Polyorganosiloxane (A) weisen vorzugsweise eine Viskosität von 10 bis 1000000 mPa.s bei 25°.C, bevorzugt 50 bis 50000 mPa.s bei 25°C, besonders bevorzugt 100 bis 20000 mPa.s bei 25°C, auf.

Die Si-gebundenen R¹O-Gruppen in den Polyorganosiloxanen (A) aus Einheiten der Formel (I) sind vorzugsweise Hydroxygruppen oder C₁₋₄-Alkoxygruppen, wie C₂H₅O-Gruppen.
Die Polyorganosiloxane (A) bestehend aus Einheiten der Formel (I) enthalten diese Si-gebundenen R¹O-Gruppen vorzugsweise in Mengen von 0,005 bis 0,099 Mol%, bevorzugt in Mengen von 0,01 bis 0,074 Mol%, besonders bevorzugt in Mengen von 0,02 bis 0,05 Mol%, jeweils bezogen auf alle an das Silizium gebundene Reste R und R¹O.

Vorzugsweise wird das Polyorganosiloxan (A) hergestellt in einem katalysierten Polykondensations- und/oder Equilibrierungprozess, wobei als Katalysator alle für Siloxane bekannten sauren oder basischen Katalysatoren eingesetzt werden können. Die Herstellung derartiger Polyorganosiloxane, die Einheiten der Formel (I) enthalten, ist dem Fachmann bekannt.

Als Kieselsäuren (B) werden in dem ersten Verfahrensschritt vorzugsweise hydrophile amorphe Kieselsäuren mit einer BET-Oberfläche von 20-1000 m²/g, vorzugsweise 50-800 m²/g, bevorzugt 80-500 m²/g, eingesetzt. Diese hydrophilen Kieselsäuren können pyrogene oder gefällte Kieselsäuren sein und sie weisen vorzugsweise eine Partikelgröße von weniger als 10 µm und eine Agglomeratgröße von weniger als 100 µm auf.

In Kombination mit den Kieselsäuren (B) können Siliconharze (C) eingesetzt werden. Die Siliconharze (C) sind nicht linear aufgebaute Polysiloxane, die neben R₃SiO_{1/2} (M)- und SiO_{4/2} (Q)-Einheiten auch Einheiten der Formel RSiO_{3/2} (T) und R₂SiO_{2/2} (D) enthalten können. Bevorzugt werden Harze eingesetzt, die aus R₃SiO_{1/2} (M)- und SiO_{4/2} -Einheiten bestehen, diese Harze werden auch als MQ-Harze bezeichnet. Das molare Verhältnis von M- zu Q-Einheiten liegt vorzugsweise im Bereich von 0,5 bis 2,0, bevorzugt im Bereich von 0,6 bis 1,0. Diese Siliconharze können außerdem bis zu 10 Gew.-% freie Hydroxy- oder Alkoxygruppen enthalten.

In einer bevorzugten Ausführungsvariante der. Erfindung enthalten die Entschäumer 1-5 Teile Kieselsäure (B) und 5-15 Teile MQ-Harze (C) je 100 Teile der Komponente A.

Als Komponente (D) werden beispielsweise Polydiorganosiloxane mit einer Viskosität von vorzugsweise 100 bis 1.000.000 mPa·s bei 25°C eingesetzt. Diese Polydiorganosiloxane können z.B. durch den Einbau von RSiO_{3/2}- (wobei R die oben dafür angegebene Bedeutung hat) oder SiO_{4/2}-Einheiten verzweigt sein. Diese verzweigten oder anvernetzten Siloxane weisen dann viskoelastische Eigenschaften auf. Vorzugsweise enthalten die Polydiorganosiloxane (D) nicht mehr als 2 % an RSiO_{3/2}- oder SiO_{4/2}-Einheiten.

In einer bevorzugten Ausführungsform werden als Komponente (D) 0,1 bis 50 Teile, besonders bevorzugt 1 bis 25 Teile, insbesondere 2 bis 15 Teile Polyorganosiloxane die aus Einheiten der allgemeinen Formel (II) bestehen eingesetzt, wobei R ein Methylrest ist, R² einen linearen und/oder verzweigten Kohlenwasserstoffrest mit 6 bis 30 Kohlenstoffatomen bedeutet und wobei in 1 % bis 10 %, bevorzugt 5 % bis 10 %, aller Einheiten der Formel (II), bezogen auf die Gesamtzahl der Einheiten, b' verschieden 0 ist, vorzugsweise 1 ist, während in den restlichen Einheiten der Formel (II) b' 0 ist. b' nimmt dabei vorzugsweise durchschnittlich einen Wert von 0,005 bis 0,1 an und die Summe (a'+b') weist durchschnittlich einen Wert von 1,9 bis 2,1 auf. Derartige Produkte sind beispielsweise durch alkalisch katalysierte Kondensation von silanolterminierten Polydimethylsiloxanen einer Viskosität von vorzugsweise 50 bis 50.000 mPa's bei 25°C und aliphatischen Alkoholen mit mehr als 6 Kohlenstoffatomen, wie Isotridecylalkohol, n-Octanol, Stearylalkohol, 4-Ethylhexadecanol oder Eicosanol, zugänglich.

Im ersten Verfahrensschritt können Katalysatoren (E) zugegeben werden. Beispiele für alkalische Katalysatoren sind Alkali- und Erdalkalihydroxide, wie NaOH, KOH, CsOH, LiOH, und Ca(OH)₂. Beispiele für saure Katalysatoren sind Salzsäure, Schwefelsäure und Phosphornitridchloride.

Als weitere Komponente (F) können im ersten Verfahrensschritt oder auch später vorzugsweise wasserunlösliche organische Verbindungen mit einem Siedepunkt von größer als 100°C zugegeben werden. Beispiele für solche organischen Verbindungen sind Mineralöle, native Öle, Isoparaffine, Polyisobutylene, Rückstände aus der Oxoalkoholsynthese, Ester niedermolekularer synthetischer Carbonsäuren, Fettsäureester, Fettalkohole, Ether niedermolekulare Alkohole, Phthalate, Ester der Phosphorsäure und Wachse. Vorzugsweise werden die organischen Verbindungen (F) in Mengen von 0 bis 200 Teilen je 100 Teile Polyorganosiloxane (A) eingesetzt.

Als weitere Komponenten zur Herstellung der erfindungsgemäßen Entschäumerformulierungen können gegebenenfalls modifizierte Polysiloxane, welche linear oder verzweigt sein können und mindestens eine Polyethergruppierung tragen, in Mengen von vorzugsweise 1 bis 50 Teilen je 100 Teile an Komponente (A) zugegeben werden. Derartige polyethermodifizierte Polysiloxane sind bekannt und z.B. in EP 1076073 A beschrieben.

Das Vermischen der Komponenten (A), (B), (C), (D) und gegebenenfalls weiterer Komponenten, wie (E) und (F), kann diskontinuierlich oder kontinuierlich durch einfaches Rühren, Kneten und/oder auch unter Anwendung von hohen Scherkräften in Kolloidmühlen, Dissolvern oder Rotor-Stator-Homogenisatoren erfolgen, wobei durch das Vermischen, wie etwa Rühren und/oder das Homogenisieren, ein Energieeintrag von bevorzugt mindestens 0,1 kJ/kg, besonders bevorzugt von 1 bis 10 000 kJ/kg, insbesondere von 5 bis 1 000 kJ/kg erfolgt.
Dabei kann der Mischvorgang bei reduziertem Druck erfolgen, um das Einmischen von Luft, welche in hochdispersen Füllstoffen enthalten ist, zu verhindern.

In dem zweiten Verfahrensschritt wird die Mischung vorzugsweise auf 100 bis 200 °C erhitzt. Dabei kann das Mischen und/oder Homogenisieren fortgesetzt werden. Das Erhitzen kann unter Inertgas (wie Helium, Argon oder Stickstoff), bei reduziertem Druck oder auch in Gegenwart von Luft erfolgen.
Es ist im Rahmen des erfindungsgemäßen Verfahrens auch möglich, dass z.B. das Vermischen der Komponenten (A), (B), (C) und (D) und gegebenenfalls weiterer Komponenten bereits bei erhöhter Temperatur erfolgt, also der erste und zweite Verfahrenschritt ganz oder zum Teil simultan verläuft.

Vorzugsweise wird die Mischung so lange erhitzt, bis die Viskosität der Mischung einen Wert von weniger als 40% insbesondere einen Wert von 5 bis 25 %, der Viskosität aufweist, die die im ersten Verfahrensschritt hergestellte Mischung vor dem Erhitzen hatte. Die Viskosität ist dabei als die Viskosität definiert, die bei einem Schergefälle von 1/s mit einem Kegel-Platte Viskosimeter bestimmt wird.

Dabei kann die Reaktion durch den Zusatz von Katalysatoren, wie KOH, oder den Zusatz von Silanen oder Silazanen unterstützt werden.

Die erfindungsgemäß hergestellten Entschäumerformulierungen zeichnen sich durch ihre hohe Wirksamkeit und einer bei Lagerung konstanten Viskosität aus.

Der Zusatz der erfindungsgemäß hergestellten Entschäumerformulierung zu den schäumenden Flotten kann direkt erfolgen, gelöst in geeigneten Lösungsmitteln, wie Methylethylketon oder t-Butanol, als Pulver oder als Emulsion zugesetzt werden.
Die zur Herstellung der Emulsionen benötigten Emulgatoren können anionisch, kationisch oder nichtionogen sein und sind dem Fachmann zur Herstellung von stabilen Siliconemulsionen bekannt. Bevorzugt werden Emulgatormischungen eingesetzt, wobei mindestens ein nichtionogener Emulgator, wie beispielsweise Sorbitanfettsäureestern, ethoxylierten Sorbitanfettsäureestern, ethoxylierten Fettsäuren, ethoxylierten linearen oder verzweigten Alkoholen mit 10 bis 20 Kohlenstoffatomen und/oder Glycerinestern, enthalten sein sollte. Weiterhin können als Verdicker bekannte Verbindungen, wie Polyacrylsäure, Polyacrylate, Celluloseether wie Carboxymethylcellulose und Hydroxyethylcellulose, natürliche Gume wie Xanthan Gum und Polyurethane sowie Konservierungsmittel und andere übliche und dem Fachmann bekannte Zusätze zugesetzt werden.
Technologien zur Herstellung von Siliconemulsionen sind bekannt. Üblicherweise erfolgt die Herstellung durch einfaches Verrühren aller Bestandteile und gegebenenfalls anschließendes Homogenisieren mit Rotor-Stator-Homogenisatoren, Kolloidmühlen, Strahldispergatoren oder Hochdruckhomogenisatoren.
Die erfindungsgemäß hergestellten Entschäumerformulierungen können auch zu frei fließenden Pulvern weiter verarbeitet werden. Diese sind z.B. bei der Anwendung in pulverförmigen Waschmitteln bevorzugt. Diese Entschäumerpulver enthalten beispielsweise 2-20 Gew.-% der Entschäumerformulierungen. Als Träger kommen z.B. Zeolithe, Natriumsulfat, Cellulosederivate, Harnstoff und Zucker zum Einsatz. Weitere Bestandteile der Entschäumerpulver können z.B. Wachse sein oder organischen Polymere, wie sie z.B. in EP 887097 A und EP 1060778 A beschrieben sind. Die Herstellung dieser Pulver erfolgt nach dem Fachmann bekannten Verfahren, wie Sprühtrocknung oder Aufbaugranulation.

Die erfindungsgemäß hergestellten Entschäumerformulierungen können überall dort eingesetzt werden, wo störender Schaum unterdrückt werden soll. Das ist z.B. in nichtwässrigen Systemen, wie bei der Teerdestillation oder der Erdölverarbeitung der Fall. Insbesondere eigenen sich die erfindungsgemäßen Entschäumerformulierungen zur Bekämpfung von Schaum in wässrigen Tensidsystemen, wobei sie sich gegenüber Entschäumerformulierungen nach dem Stand der Technik durch eine höhere, länger anhaltende Wirksamkeit bei geringen Zusatzmengen auszeichnen.
Die erfindungsgemäßen Entschäumerformulierungen können zur Entschäumung von Abwässern, von intensiv bewegten Flüssigkeiten, von Destillations-, Wasch-, Färbe- oder Ausrüstungsprozessen in Haushalt oder Industrie, von chemischen Aufschluss- oder Umwandlungsprozessen, wie chemische Synthesen, Zellstoff- oder Papierherstellung oder Erdölaufbereitung (Raffinierung), zur Entschäumung bei fermentativen Prozessen, bei der Herstellung von Dispersionen, bei der Herstellung oder Anwendung von formulierten-Produkten wie z.B. Spritzmittel, Kosmetika, Arzneimitteln oder von Schäumen, die bei Abfüllvorgängen auftreten, verwendet werden.

### Ausführungsbeispiele

Alle im Folgenden angegebenen Teile sind (wenn nicht anders angegeben) auf das Gewicht bezogen. Die Viskositäten beziehen sich auf 25°C und ein Schergefälle von 1/s.

### Prüfungen der Entschäumerwirksamkeit

### 1. Antischaumkennzahl AKZ

In einer Vorrichtung entsprechend DE-A 2551260 wurden 200 ml einer 4 Gew.-%igen wässrigen Lösung eines Natriumalkylsulfonates (Mersolat), die 10 mg des zu untersuchenden Entschäumers (gelöst in der 10-fachen Menge an Methylethylketon) enthält, 1 min mit zwei gegenläufigen Rührern aufgeschäumt. Anschließend wurde der Schaumzerfall aufgezeichnet. Aus der Fläche der Auftragung Schaumhöhe gegen die Zeit wurde die Antischaumkennzahl berechnet. Je niedriger diese Zahl ist, desto wirksamer ist der Entschäumer.

### 2. Rührtest

300 ml einer Lösung, die 1 Gew.-% eines entschäumerfreien, alkalischen Waschpulvers enthält, wurde 5 min mit einem Rührer bei einer Geschwindigkeit von 1000 Umdrehungen/min aufgeschäumt. Anschließend wurden 100 µl einer 10 Gew. %igen Lösung des Entschäumers in Methylethylketon zugegeben und das Rühren weitere 25 min fortgesetzt. Während der gesamten Zeit wurde die Schaumhöhe aufgezeichnet.
Als Maß für die Wirksamkeit wurde die durchschnittliche Schaumhöhe, bezogen auf die Schaumhöhe ohne Entschäumer, nach 2-3 min berechnet. Je niedriger dieser Wert ist, desto wirksamer ist der Entschäumer.

In den folgenden Beispielen ist unter % Einheiten der Anteil der entsprechenden Siloxaneinheiten bezogen auf die Gesamtzahl aller Siloxaneinheiten im Siloxan zu verstehen.

### Beispiel 1:

91 Teile eines Polydimethylsiloxans (A), das aus 99,2 % Einheiten der Formel (CH₃)₂SiO_{2/2} und 0,8 % Einheiten der Formel (CH₃)₃SiO_{1/2} besteht, bei dem 0,03 % aller Einheiten des Polydimethylsiloxans Si-gebundene Ethoxygruppen tragen, 4,5 Teile eine hydrophilen pyrogenen Kieselsäure (B) mit einer BET-Oberfläche von 200 m²/g und
4,5 Teile eines Polydimethylsiloxans (D), das aus 92 % Einheiten der Formel (CH₃)₂SiO_{2/2} und 8 % Einheiten der Formel (CH₃)₂(OH)SiO_{1/2} besteht,
werden mit einer Dissolverscheibe innig gemischt. Diese Mischung hatte eine Viskosität von 200000 mPas.

Anschließend wurde diese Mischung 4 Stunden auf 150°C erhitzt,
wobei die Viskosität auf 30100 mPas, das sind 15 % der Ausgangsviskosität der Mischung, abgesunken war.
Der mit dieser Mischung durchgeführte Rührtest (Test 2) ergab eine Schaumhöhe von 30 (siehe Tabelle 1). Der Entschäumer ist somit sehr effektiv.
Die so erhaltene Entschäumerformulierung wurde nun hinsichtlich der Stabilität überprüft. Die Ergebnisse dieses Tests sind in Tabelle 1 zusammengefasst.

### Vergleichsversuch V1:

91 Teile eines Polydimethylsiloxans, das aus 99,2 % Einheiten der Formel (CH₃)₂SiO_{2/2} und 0,8 % Einheiten der Formel (CH₃)₃SiO_{1/2} besteht, bei dem keine an das Silizium gebundenen Reste der Formel OR¹ nachweisbar sind,
4,5 Teile eine hydrophilen pyrogenen Kieselsäure (B) mit einer BET-Oberfläche von 200 m²/g und
4,5 Teilen eines Polydimethylsiloxans (D), das aus 92 % Einheiten der Formel (CH₃)₂SiO_{2/2} und 8 % Einheiten der Formel (CH₃)₂(OH)SiO_{1/2} besteht,
wurden mit einer Dissolverscheibe innig gemischt. Diese Mischung hatte eine Viskosität von 124000 mPas.
Anschließend wurde diese Mischung 4 Stunden auf 150°C erhitzt, wobei die Viskosität auf 70000 mPas, das sind 56 % der Ausgangsviskosität der Mischung, abgesunken war.
Der mit der so hergestellten Entschäumerformulierung durchgeführte Rührtest (Test 2) ergab eine Schaumhöhe von 75 (siehe Tabelle 1). Der Entschäumer hat eine schlechte, unzureichende Wirkung.
Die so erhaltene Entschäumerformulierung wurde nun hinsichtlich der Stabilität überprüft. Die Ergebnisse dieses Tests sind in Tabelle 1 zusammengefasst.

### Beispiel 2:

100 Teile eines Polydimethylsiloxans (A), das aus 99,2 % an Einheiten der Formel (CH₃)₂SiO_{2/2} und 0,8 % Einheiten der Formel (CH₃)₃SiO_{1/2} bei dem 0,08 % aller Einheiten des Polydimethylsiloxans an das Silizium gebundene Hydroxygruppen (Si-OH) tragen,
5 Teile eine hydrophilen pyrogenen Kieselsäure (B) mit einer BET-Oberfläche von 200 m²/g und
5 Teile eines Polydimethylsiloxans (D), das aus 92 % an Einheiten der Formel (CH₃)₂SiO_{2/2} und 8 % Einheiten der Formel (CH₃)₂(OH)SiO_{1/2} werden mit einer Dissolverscheibe innig gemischt. Diese Mischung hatte eine Viskosität von 55000 mPas. Anschließend wurde diese Mischung 7 Stunden auf 150°C erhitzt, wobei die Viskosität auf 5600 mPas, das sind 10 % der Ausgangsviskosität der Mischung, abgesunken war.
Es wurde die Antischaumkennzahl AKZ bestimmt. Die Ergebnisse sind in Tabelle 1 zusammengefasst.
Die so erhaltene Entschäumerformulierung wurde nun hinsichtlich der Stabilität überprüft. Die Ergebnisse dieses Tests sind ebenfalls in Tabelle 1 zusammengefasst.

### Vergleichsversuch V2:

100 Teile eines Polydimethylsiloxans, das aus 99,2 % an Einheiten der Formel (CH₃)₂SiO_{2/2} und 0,8 % Einheiten der Formel (CH₃)₃SiO_{1/2} bei dem keine an das Silizium gebundenen Reste der Formel OR¹ nachweisbar sind,
5 Teile eine hydrophilen pyrogenen Kieselsäure (B) mit einer BET-Oberfläche von 200 m²/g und
5 Teile eines Polydimethylsiloxans (D), das aus 92 % an Einheiten der Formel (CH₃)₂SiO_{2/2} und 8 % Einheiten der Formel (CH₃)₂(OH)SiO_{1/2} werden mit einer Dissolverscheibe innig gemischt. Diese Mischung hatte eine Viskosität von 48000 mPas. Anschließend wurde diese Mischung 7h auf 150°C erhitzt, wobei die Viskosität auf 32500 mPas, das sind 68% der Ausgangsviskosität der Mischung abgesunken war.
Es wurde die Antischaumkennzahl AKZ bestimmt. Die Ergebnisse sind in Tabelle 1 zusammengefasst.
Die so erhaltene Entschäumerformulierung wurde nun hinsichtlich der Stabilität überprüft. Die Ergebnisse dieses Tests sind ebenfalls in Tabelle 1 zusammengefasst.

**Tabelle 1**

| Beispiel bzw. Vergleichsversuch | 1 | V1 | 2 | V2 |
|---|---|---|---|---|
| AKZ | - | - | 1037 | 2454 |
| Rührtest in % | 30 | 75 | - | - |
| Viskosität (1) nach Ausheizen [mPa.s] | 30.100 | 70.000 | 5.600 | 32.500 |
| Viskosität (2) nach 3 Monaten [mPa.s] | 28.600 | 53.700 | 5.190 | 28.250 |
| Viskosität (2) / (1) in % | 95,0 | 76,7 | 92,7 | 86, 9 |

Es wird deutlich, dass bei dem erfindungsgemäß hergestellten Entschäumer gemäß Beispiel 2 die AKZ nicht einmal 50% der AKZ des nicht erfindungsgemäßen Entschäumers gemäß Vergleichsversuch 2 beträgt, dieser also doppelt so wirksam ist. Das ist umso überraschender, da durch die Komponente (D) in beiden Fällen ein hoher Anteil an Si-gebundenen OH-Gruppen eingebracht wird, sodass die geringen Mengen an SiOH aus Komponente (A) in ihrer Auswirkung überraschend waren. Auch der erfindungsgemäß hergestellte Entschäumer gemäß Beispiel 1 ist hervorragend wirksam, was sich an der weniger als halb so hohen Schaumhöhe gegenüber Vergleichsversuch 1 im Rührtest zeigt.

Die Stabilität der erfindungsgemäß hergestellten Entschäumer ist hervorragend. Bei Lagerung ändert sich die Viskosität um weniger als 10 % gegenüber der Viskosität nach Ausheizen, während bei den nicht erfindungsgemäßen Vergleichsbeispielen diese Viskositätsänderung höher ist.

### Beispiel 3

89,3 Teile eines Polydimethylsiloxans (A), das aus 99,5 % (CH₃)₂SiO- und 0,5 % (CH₃)₃SiO_{1/2}-Einheiten besteht, bei dem 0, 07 % aller Einheiten des Polydimethylsiloxans Hydroxygruppen (S'i-OH) tragen,
5 Teile einer hydrophilen pyrogenen Kieselsäure (B) mit einer BET-Oberfläche von 300 m²/g,
3 Teile eines Polydimethylsiloxans (D) mit einer endständingen C₂₀-Alkylgruppe,
2 Teile eines Siliconharzes (C), welches im Wesentlichen aus Einheiten der allg. Formel (R₃SiO)_{0,5}- und SiO₂-Einheiten besteht, und
0,7 Teile einer 20%igen methanolischen KOH (E) werden mit einer Dissolverscheibe innig gemischt. Diese Mischung hatte eine Viskosität von 188000 mPas.
Anschließend wurde diese Mischung 4 Stunden auf 150°C erhitzt,
wobei die Viskosität auf 27200 mPas, das sind 14% der Ausgangsviskosität der Mischung, abgesunken war.

Die so erhaltene Entschäumerformulierung wurde nun hinsichtlich der Antischaumkennzahl AKZ, des Rührtests und der Stabilität überprüft. Die Ergebnisse dieser Tests sind in Tabelle 2 zusammengefasst.

### Vergleichsversuch V3:

89,3 Teile eines Polydimethylsiloxans, das aus 99,5 % (CH₃)₂SiO- und 0,5 % (CH₃)₃SiO_{0,5}-Einheiten besteht, bei dem keine an das Silizium gebundene Reste der Formel OR¹ nachweisbar sind,
5 Teile einer hydrophilen pyrogenen Kieselsäure (B) mit einer BET-Oberfläche von 300 m²/g
3 Teile eines Polydimethylsiloxans (D) mit einer endständigen C₂₀-Alkylgruppe,
2 Teile eines Siliconharzes (C), welches im Wesentlichen aus Einheiten der allg. Formel (R₃SiO)_{0,5}- und SiO₂-Einheiten besteht, und
0,7 Teile einer 20%igen methanolischer KOH (E) werden mit einer Dissolverscheibe innig gemischt. Diese Mischung hatte eine Viskosität von 31300 mPas.
Anschließend wurde diese Mischung 4 Stunden auf 150°C erhitzt, wobei die Viskosität auf 28670 mPas, das sind 92 % der Ausgangsviskosität der Mischung, abgesunken war.
Die so erhaltene Entschäumerformulierung wurde nun hinsichtlich der Antischaumkennzahl AKZ, des Rührtests und der Stabilität überprüft. Die Ergebnisse dieser Tests sind in Tabelle 2 zusammengefasst.

### Beispiel 4:

89,3 Teile eines Polydimethylsiloxans (A), das aus 99,5 % (CH₃)₂SiO- und 0,5 % (CH₃)₃SiO_{1/2}-Einheiten besteht, bei dem 0, 030 % aller Einheiten des Polydimethylsiloxans Hydroxygruppen (Si-OH) tragen,
5 Teile einer hydrophilen pyrogenen Kieselsäure (B) mit einer BET-Oberfläche von 300 m²/g,
3 Teile eines Polydimethylsiloxans (D) mit einer endständigen C₂₀-Alkylgruppe,
2 Teile eines Siliconharzes (C), welches im Wesentlichen aus Einheiten der allg. Formel (R₃SiO)_{0,5}- und SiO₂-Einheiten besteht, und
0,7 Teile einer 20%igen methanolischen KOH (E) werden mit einer Dissolverscheibe innig gemischt. Diese Mischung hatte eine Viskosität von 205000 mPas.
Anschließend wurde diese Mischung 4 Stunden auf 150°C erhitzt,
wobei die Viskosität auf 27000 mPas, das sind 13 % der Ausgangsviskosität der Mischung, abgesunken war.
Die so erhaltene Entschäumerformulierung wurde nun hinsichtlich der Antischaumkennzahl AKZ, des Rührtests und der Stabilität überprüft. Die Ergebnisse dieser Tests sind in Tabelle 2 zusammengefasst.

### Vergleichsversuch V4:

89,3 Teile eines Polydimethylsiloxans, das zu 100 % aus (CH₃)₂SiO-Einheiten besteht und das zu 0,9 % aller Einheiten des Polydimethylsiloxans Hydroxygruppen (Si-OH) enthält,
5 Teile einer hydrophilen pyrogenen Kieselsäure (B) mit einer BET-Oberfläche von 300 m²/g,
3 Teile eines Polydimethylsiloxans (D) mit einer endständigen C20-Alkylgruppe,
2 Teile eines Siliconharzes (C), welches im Wesentlichen aus Einheiten der allg. Formel (R₃SiO)_{0,5}- und SiO₂-Einheiten besteht und 0,7 Teile einer 20%igen methanolischen KOH (E)
werden mit einer Dissolverscheibe innig gemischt. Die erhaltene Mischung hatte eine Viskosität von 846 mPas.
Anschließend wurde diese Mischung 4 Stunden auf 150°C erhitzt,
wobei die Viskosität auf 565 mPas, das sind 67 % der Ausgangsviskosität der Mischung, abgesunken war.

Die so erhaltene Entschäumerformulierung wurde nun hinsichtlich der Antischaumkennzahl AKZ, des Rührtests und der Stabilität überprüft. Die Ergebnisse dieser Tests sind in Tabelle 2 zusammengefasst.
Die Mischung ist nicht lagerstabil. Durch Feststoff-Absetzung wird sie inhomogen und somit unbrauchbar.

### Vergleichsversuch V5

89,3 Teile einer Mischung der in den Vergleichsbeispielen V3 und V4 eingesetzten Polydimethylsiloxane - nämlich Polydimethylsiloxan, das aus 99,5 % (CH₃)₂SiO- und 0,5 % (CH₃)₃SiO_{0,5}-Einheiten besteht, bei dem keine an das Silizium gebundene Reste der Formel OR¹ nachweisbar sind, und Polydimethylsiloxan, das zu 100 % aus (CH₃)₂SiO-Einheiten besteht und das zu 0,9 % an das Silizium gebundene Hydroxygruppen (Si-OH) enthält - wobei die Mischung derart eingestellt wird, dass 0,03 % aller Einheiten des Polydimethylsiloxans der Mischung an das Silizium gebundene Hydroxygruppen (Si-OH) tragen.
5 Teile einer hydrophilen pyrogenen Kieselsäure (B) mit einer BET-Oberfläche von 300m²/g
3 Teile eines Polydimethylsiloxans (D) mit einer endständigen C₂₀-Alkylgruppe
2 Teile eines Siliconharzes (C), welches im Wesentlichen aus Einheiten der allg. Formel (R₃SiO)_{0,5}- und SiO₂-Einheiten besteht,
und 0,7 Teile einer 20%igen methanolischen KOH (E) werden mit einer Dissolverscheibe innig gemischt. Diese Mischung hatte eine Viskosität von 420000 mPas.
Anschließend wurde diese Mischung 4 Stunden auf 150°C erhitzt,
wobei die Viskosität auf 350000 mPas, das sind 83 % der Ausgangsviskosität der Mischung, abgesunken war.

Die so erhaltene Entschäumerformulierung wurde nun hinsichtlich der Antischaumkennzahl AKZ, des Rührtests und der Stabilität überprüft. Die Ergebnisse dieser Tests sind in Tabelle 2 zusammengefasst.
Die Mischung vergelt bei Lagerung und ist somit unbrauchbar.

**Tabelle 2:**

| Beispiel bzw Vergleichsversuch | 3 | 4 | V3 | V4 | V5 |
|---|---|---|---|---|---|
| AKZ | 401 | 310 | 912 | 1560 | 611 |
| Rührtest in % | 32 | 29 | 60 | 81 | 53 |
| Viskosität (1) nach Ausheizen [mPa.s] | 27.200 | 27.000 | 28.670 | 565 | 350.000 |
| Viskosität (2) nach 3 Monaten [mPa.s] | 28.900 | 26.400 | 8.300 | Füllstoff abgesetzt | Gel* |
| Viskosität (2)/(1) in % | 109,4 | 97,7 | 29 | -- | -- |

| | | | | | |
|---|---|---|---|---|---|
| * Viskosität nicht messbar | | | | | |

Die erfindungsgemäßen Entschäumer (Tabelle 2) sind nicht nur im Hinblick auf die AKZ und den Rührtest deutlich effektiver als die nicht erfindungsgemäßen Entschäumer, sondern sie weisen auch eine gute Stabilität auf im Gegensatz zu den nicht erfindungsgemäßen Entschäumern, die Viskositäts-instabil sind, bzw. die Feststoff absetzen oder vergelen. Die Viskosität der erfindungsgemäß hergestellten Entschäumer ändert sich bei Lagerung bei Raumtemperatur innerhalb von 3 Monaten um weniger als 10 %.

## Patentansprüche

1. Verfahren zur Herstellung von Entschäumerformulierungen unter Verwendung von hydrophilen Kieselsäuren, bei dem
(i) in einem ersten Verfahrensschritt
(A) 100 Teile mindestens eines Polyorganosiloxans aus Einheiten der allgemeinen Formel
Rₐ(R¹O)_{b}SiO_{(4-a-b)/2} (I),
worin R gleich oder verschieden sein kann und Wasserstoff, einen einwertigen, substituierten oder unsubstituierten, gesättigten oder ungesättigten Kohlenwasserstoffrest mit 1 bis 30 Kohlenstoffatomen je Rest bedeutet,
R¹ gleich oder verschieden sein kann und ein Wasserstoffatom oder einen einwertigen, substituierten oder unsubstituierten gesättigten oder ungesättigten Kohlenwasserstoffrest mit 1 bis 30 Kohlenstoffatomen je Rest bedeutet,
a 0, 1, 2 oder 3 ist,
b 0 oder 1, ist,
wobei die Summe a+b ≤ 3 ist,
mit der Maßgabe, dass in 0,01 bis 0,2 % aller Einheiten der allgemeinen Formel (I), bezogen auf die Gesamtzahl der Einheiten der Formel (I), b ist, während in den restlichen Einheiten der Formel (I) b 0 ist,
mit
(B) 0,1 bis 100 Teilen mindestens einer amorphen hydrophilen gefällten oder pyrogenen Kieselsäure mit einer BET-Oberfläche von 20-1000 m²/g
(C) 0 bis 50 Teilen eines Siliconharzes, das im Wesentlichen aus Einheiten der allgemeinen Formel R₃SiO_{1/2} und SiO_{4/2} besteht, wobei R die oben angegebene Bedeutung hat,
(D) 0 bis 200 Teilen eines Polyorganosiloxans aus Einheiten der Formel,
R_{a'}(R²O)_{b'}SiO_{(4-a'-b')/2} (II),
wobei R die oben dafür angegebene Bedeutung hat,
R² gleich oder verschieden sein kann und ein Wasserstoffatom oder einen einwertigen, substituierten oder unsubstituierten gesättigten oder ungesättigten Kohlenwasserstoffrest mit 1 bis 30 Kohlenstoffatomen je Rest bedeutet,
a' 0, 1, 2 oder 3 ist,
b' 0 oder 1, ist
wobei die Summe a'+b' ≤ 3 ist,
mit der Maßgabe, dass in weniger als 0,01% oder in mehr als 1% aller Einheiten der allgemeinen Formel (II), bezogen auf die Gesamtzahl der Einheiten der Formel (II), b' 1 ist, während in den restlichen Einheiten der Formel (II) b' 0 ist,
mit der Maßgabe, dass (A) und (B)
entweder in Kombination mit (C), wobei (C) in Mengen von 1-50 Teilen mitverwendet wird,
oder in Kombination mit (D), wobei (D) in Mengen von 1-200 Teilen mitverwendet wird,
oder in Kombination mit (C) und (D), wobei (C) in Mengen von 1-50 Teilen und (D) in Mengen von 1-200 Teilen mitverwendet wird,
eingesetzt werden,
und gegebenenfalls
(E) 0 - 5,0 Teilen eines alkalischen oder sauren Katalysators
und gegebenenfalls
(F) 0 - 1000 Teilen einer organischen Verbindung, die kein Silicium enthält,
vermischt werden und
(ii) in einem zweiten Verfahrensschritt diese Mischung auf eine Temperatur von 50 bis 250°C erhitzt wird, wobei mindestens solange erhitzt wird, bis die Viskosität einen Wert von weniger als 50 % der mit einem Kegel-Platte Viskosimeter bei einer Temperatur von 25°C und einem Schergefälle von 1/s gemessenen Viskosität aufweist, die die im ersten Verfahrensschritt hergestellte Mischung vor dem Erhitzen hatte.

2. Verfahren nach Anspruch 1, **dadurch gekennzeichnet, dass** in 0,02 bis 0,15% aller Einheiten der Formel (I), bezogen auf die Gesamtzahl der Einheiten der Formel (I), b 1 ist, während in den restlichen Einheiten der Formel (I) b 0 ist.

3. Verfahren nach Anspruch 1 oder 2, **dadurch gekennzeichnet, dass** die R¹O-Gruppen in den Polyorganosiloxanen (A) Hydroxygruppen sind.

4. Verfahren nach Anspruch 1, 2 oder 3, **dadurch gekennzeichnet, dass** die R²O-Gruppen in den Polyorganosiloxanen (D) C₁₋₃₀-Alkoxygruppen sind.

5. Verfahren nach einem der Ansprüche 1 bis 4, **dadurch gekennzeichnet, dass** 0,1 bis 50 Teile Polyorganosiloxan (D) bezogen auf 100 Teile Polyorganosiloxan (A) eingesetzt wird und in den Polyorganosiloxanen (D) R² einen linearen und/oder verzweigten Kohlenwasserstoffrest mit 6 bis 30 Kohlenstoffatomen bedeutet.

6. Verfahren nach einem der Ansprüche 1 bis 5, **dadurch gekennzeichnet, dass** als organische Verbindungen (F), die kein Silicium enthalten, wasserunlösliche organische Verbindungen mit einem Siedepunkt von größer als 100°C eingesetzt werden.

7. Verwendung der nach einem der in den Ansprüchen 1 bis 6 hergestellten Entschäumerformulierungen zur Herstellung von entschäumend-wirkenden Lösungen, Pulvern, Emulsionen oder Dispersionen.

8. Verwendung der nach einem der in den Ansprüchen 1 bis 7 hergestellten Entschäumerformulierungen zur Entschäumung von Abwässern, von intensiv bewegten Flüssigkeiten, von Destillations-, Wasch-, Färbe- oder Ausrüstungsprozessen in Haushalt oder Industrie, von chemischen Aufschluss- oder Umwandlungsprozessen, wie chemischen Synthesen, Zellstoff- oder Papierherstellung oder Erdölaufbereitung (Raffinierung), zur Entschäumung bei fermentativen Prozessen, bei der Herstellung von Dispersionen, bei der Herstellung oder Anwendung von formulierten Produkten, wie Spritzmittel, Kosmetika, Arzneimitteln oder Farben, oder von Schäumen, die bei Abfüllvorgängen auftreten.

## Claims

1. Method for the production of defoamer formulations using hydrophilic silicas wherein
(i) in a first step
(A) 100 parts of at least one polyorganosiloxane comprising units of the general formula
Rₐ(R¹O)_{b}SiO_{(4-a-b)/2} (I)
in which each R may be the same or different and is hydrogen, a monovalent, substituted or unsubstituted, saturated or unsaturated hydrocarbon radical having 1 to 30 carbon atoms per radical,
each R¹ may be the same or different and is a hydrogen atom or a monovalent, substituted or unsubstituted saturated or unsaturated hydrocarbon radical having 1 to 30 carbon atoms per radical,
a is 0, 1, 2 or 3,
b is 0 or 1,
subject to the sum a+b being ≤ 3,
with the proviso that in 0.01% to 0.2% of all the units of the general formula (I), based on the total number of units of formula (I), b is 1, while in the remaining units of formula (I) b is 0,
are mixed with
(B) 0.1 to 100 parts of at least one amorphous hydrophilic precipitated or fumed silica having a BET surface area of 20-1000 m²/g
(C) 0 to 50 parts of a silicone resin consisting essentially of units of the general formula R₃SiO_{1/2} and SiO_{4/2}, where R is as defined above,
(D) 0 to 200 parts of a polyorganosiloxane comprising units of the formula
R_{a'}(R²O)_{b'}SiO_{(4-a'-b')/2} (II),
where R is as defined above,
each R² may be the same or different and is a hydrogen atom or a monovalent, substituted or unsubstituted saturated or unsaturated hydrocarbon radical having 1 to 30 carbon atoms per radical,
a' is 0, 1, 2 or 3,
b' is 0 or 1,
subject to the sum a'+b' being ≤ 3,
with the proviso that in less than 0.01% or in more than 1% of all units of the general formula (II), based on the total number of units of formula (II), b' is 1, while in the remaining units of formula (II) b' is 0,
with the proviso that (A) and (B) are used
either in combination with (C), in which case (C) is used in amounts of 1-50 parts,
or in combination with (D), in which case (D) is used in amounts of 1-200 parts,
or in combination with (C) and (D), in which case (C) is used in amounts of 1-50 parts and (D) in amounts of 1-200 parts,
and optionally
(E) 0 - 5.0 parts of an alkaline or acidic catalyst, and optionally
(F) 0 - 1000 parts of an organic compound containing no silicon,
and
(ii) in a second step this mixture is heated to a temperature of 50 to 250°C, heating being continued at least until the viscosity has a value of less than 50% of the viscosity, as measured using a cone/plate viscometer at a temperature of 25°C and a shear rate of 1/s, which the mixture prepared in the first step had before heating.

2. Method according to Claim 1, **characterized in that** in 0.02% to 0.15% of all the units of formula (I), based on the total number of units of formula (I), b is 1, while in the remaining units of formula (I) b is 0.

3. Method according to Claim 1 or 2, **characterized in that** the R¹O groups in the polyorganosiloxanes (A) are hydroxyl groups.

4. Method according to Claim 1, 2 or 3, **characterized in that** the R²O groups in the polyorganosiloxanes (D) are C₁₋₃₀ alkoxy groups.

5. Method according to any one of Claims 1 to 4, **characterized in that** 0.1 to 50 parts of polyorganosiloxane (D) are used per 100 parts of polyorganosiloxane (A) and in the polyorganosiloxanes (D) R² is a linear and/or branched hydrocarbon radical having 6 to 30 carbon atoms.

6. Method according to any one of Claims 1 to 5, **characterized in that** water-insoluble organic compounds having a boiling point of greater than 100°C are used as organic compounds (F) containing no silicon.

7. Use of the defoamer formulations produced according to any one of Claims 1 to 6 for producing defoaming solutions, powders, emulsions or dispersions.

8. Use of the defoamer formulations produced according to any one of Claims 1 to 7 for defoaming wastewaters, intensively agitated liquids, distillation, washing, dyeing or finishing operations in the household or industry, chemical digestion or conversion operations, such as chemical syntheses, pulp- or papermaking or petroleum processing (refining), for defoaming in fermentative operations, in the preparation of dispersions, in the preparation or application of formulated products, such as sprays, cosmetics, drugs or paints, or of foams which occur during dispensing operations.

## Revendications

1. Procédé pour la préparation de compositions antimousse avec utilisation d'acides siliciques hydrophiles, dans lequel
(i) dans une première étape du procédé on mélange
(A) 100 parties en poids d'au moins un polyorganosiloxane constitué de motifs de formule générale
Rₐ(R¹O)_{b}SiO_{(4-a-b)/2} (I),
dans laquelle R peut être identique ou différent et représente un atome d'hydrogène ou un radical hydrocarboné monovalent, substitué ou non substitué, saturé ou insaturé, ayant de 1 à 30 atomes de carbone par radical,
R¹ peut être identique ou différent et représente un atome d'hydrogène ou un radical hydrocarboné monovalent, substitué ou non substitué, saturé ou insaturé, ayant de 1 à 30 atomes de carbone par radical,
a est 0, 1, 2 ou 3,
b est 0 ou 1,
la somme a+b étant ≤ 3,
étant entendu que dans 0,01 à 0,2 % de tous les motifs de formule générale (I), par rapport au nombre total des motifs de formule (I), b est 1, tandis que dans les autres motifs de formule (I) b est 0,
avec
(B) 0,1 à 100 parties d'au moins un acide silicique pyrogéné ou précipité hydrophile amorphe ayant une surface BET de 20 - 1 000 m₂/g
(C) 0 à 50 parties d'une résine silicone qui est essentiellement constituée de motifs de formule générale R₃SiO_{1/2} et SiO_{4/2}, R ayant la signification indiquée plus haut,
(D) 0 à 200 parties d'un polyorganosiloxane constitué de motifs de formule
R_{a'}(R²O)_{b'}SiO_{(4-a'-b')/2} (II),
dans laquelle R a la signification indiquée plus haut,
R² peut être identique ou différent et représente un atome d'hydrogène ou un radical hydrocarboné monovalent, substitué ou non substitué, saturé ou insaturé, ayant de 1 à 30 atomes de carbone par radical,
a' est 0, 1, 2 ou 3,
b' est 0 ou 1,
la somme a'+b' étant ≤ 3,
étant entendu que dans moins de 0,01 % ou dans plus de 1 % de tous les motifs de formule générale (II), par rapport au nombre total des motifs de formule (II), b' est 1, tandis que dans les autres motifs de formule (II) b' est 0,
étant entendu que (A) et (B) sont utilisés :
en association avec (C), (C) étant en même temps utilisé en quantités de 1-50 parties,
ou en association avec (D), (D) étant en même temps utilisé en quantités de 1-200 parties,
ou en association avec (C) et (D), (C) étant en même temps utilisé en quantités de 1-50 parties et
(D) étant en même temps utilisé en quantités de 1-200 parties,
et éventuellement
(E) 0-5,0 parties d'un catalyseur acide ou alcalin
et éventuellement
(F) 0 - 1 000 parties d'un composé organique qui ne contient pas de silicium,
et
(ii) dans une deuxième étape du procédé on chauffe ce mélange à une température de 50 à 250 °C, au moins jusqu'à ce que la viscosité ait une valeur de moins de 50 % de la viscosité du mélange préparé dans la première étape du procédé avant le chauffage, ladite viscosité de départ étant mesurée à l'aide d'un viscosimètre à bille et plateau, à une température de 25 °C et à une vitesse de cisaillement de 1/s.

2. Procédé selon la revendication 1, **caractérisé en ce que** dans 0,02 à 0,15 % de tous les motifs de formule (I), par rapport au nombre total des motifs de formule (I), b est 1, tandis que dans les autres motifs de formule (I) b est 0.

3. Procédé selon la revendication 1 ou 2, **caractérisé en ce que** les groupes R¹O dans les polyorganosiloxanes (A) sont des groupes hydroxy.

4. Procédé selon la revendication 1, 2 ou 3, **caractérisé en ce que** les groupes R²O dans les polyorganosiloxanes (D) sont des groupes alcoxy en C₁-C₃₀.

5. Procédé selon l'une quelconque des revendications 1 à 4, **caractérisé en ce qu'**on utilise 0,1 à 50 parties de polyorganosiloxane (D), par rapport à 100 parties de polyorganosiloxane (A) et dans les polyorganosiloxanes (D) R² représente un radical hydrocarboné linéaire et/ou ramifié ayant de 6 à 30 atomes de carbone.

6. Procédé selon l'une quelconque des revendications 1 à 5, **caractérisé en ce qu'**en tant que composés organiques (F) qui ne contiennent pas de silicium, on utilise des composés organiques insolubles dans l'eau, ayant un point d'ébullition de plus de 100 °C.

7. Utilisation des compositions antimousse préparées selon l'une quelconque des revendications 1 à 6, pour la préparation de solutions, poudres, émulsions ou dispersions à activité antimousse.

8. Utilisation des compositions antimousse préparées selon l'une quelconque des revendications 1 à 7, pour le démoussage d'eaux résiduaires, de liquides en mouvement intense, de processus de distillation, lavage, coloration ou traitement dans la maison ou l'industrie, tels que des processus chimiques d'attaque ou de transformation, tels que des synthèses chimiques, la fabrication du papier ou de la cellulose ou le traitement (raffinage) du pétrole, pour le démoussage dans des processus de fermentation, dans la préparation de dispersions, lors de la fabrication ou l'application de produits formulés, tels que des produits à pulvériser, des cosmétiques, des médicaments ou des peintures, ou de mousses qui apparaissent dans des opérations de remplissage.
